# EUROPEAN PATENT APPLICATION

(11) **EP 2 592 590 A1**
(43) Date of publication of application: **15.05.2013**
(21) Application number: 11803174.9
(22) Date of filing: 06.07.2011
(51) Int. Cl.: G06Q 30/00, B67B 7/54, G06K 19/077

(54) **METHOD AND SYSTEM FOR DISTRIBUTION AND DISPENSING OF WINE**

(30) Priority: 06.07.2010 ES 201031034
(71) Applicant: De Benito Secades, Ignacio, 28050 Madrid (ES); Frelin, Laurence, 28109 Alcobendas (Madrid) (ES)
(72) Inventor: De Benito Secades, Ignacio, 28050 Madrid (ES); Frelin, Laurence, 28109 Alcobendas (Madrid) (ES)
(74) Representative: Carvajal y Urquijo, Isabel
(86) International application number: PCT/ES2011/000225
(87) International publication number: WO 2012/004431

(57) **Abstract**

The invention relates to a method for distributing and marketing wine. Said method includes the following steps: bottling the wine in containers (20) holding the amount for standard glasses for the type of wine in question; distributing the containers (20) to distribution logistics centers (1); providing a remote site (website) on a central server (2), to which the logistics centers (1) are connected; the user (3) sending a service request (purchase order) with the name of the wine and the number of containers to the central server (2) through said website, using a means of transport (4) to send the containers ordered to the user (3); and providing a serving device (5) that, when the wine is to be consumed, automatically opens a container (20) of the wine to be consumed which, when places in the serving device (5), is then poured into a glass (6).

## Description

### TECHNICAL FIELD OF THE INVENTION

The present invention relates to a method and system for wine distribution and dosing in wine tasting, having a particular application in the marketing and service of amounts of wine closer to a volume of one or a few glasses of wine, with the purpose of providing the possibility of tasting and consumption without having to open a conventional bottle of 0.325 or 0.75 litres without consuming it completely, or preliminarily trying the wine before deciding on a full bottle of the wine in question.

### BACKGROUND OF THE INVENTION

In the field of oenology it is often an unmet need to have small amounts of wine to taste before deciding to buy a particular bottle in a restaurant, for direct consumption, in specialized wine shops etc.

There are some attempts to address this issue, including patent applications US20100017305 and US20070233567.

Patent application US20100017305 discloses a method for the distribution and marketing of wine comprising the distribution of a package containing a number of sealed containers of wine having associated reference codes and which are free of markings identifying the wine content; and provides a "website" in which a consumer can enter a reference code associated with a wine container and, in response, receive information identifying the wine in question; the consumers may further make their order at this "website" for the shipment of the identified wine. This method allows the blind tasting of a wine, in order to decide on the eventual purchase thereof.

On the other hand, patent application US20070233567 describes a dispensing system comprising a data reader that allows wine tasting without needing to be attended by a sales representative, as well as the simplified sale of wines in restaurants and similar. A wine marketing system, which includes wine tasting provided by the dispensing system, allowing the potential buyer to try small quantities of wine without the help or supervision of an employee. Notwithstanding the above systems, there remains a need in the art to pack specific doses for direct service of the wine served in glasses, both for domestic use and restaurants, where it is customary to enjoy good wine, but not to finish the entire contents of the bottle, thus on many occasions wasting the surplus amount. The systems known so far have certain disadvantages from the viewpoint of logistics and operation, especially the container opening systems which are impractical. For example, in the case of quality wines, it would be possible in former systems to fraudulently fill the containers with lower quality wines.

The present invention aims to provide a solution to these problems and disadvantages.

### EXPLANATION OF THE INVENTION

For this purpose, the object of the present invention is to provide, according to a first aspect, a new method for the dosing and distribution in wine tasting, which in essence is characterized by the characterizing part of claim 1.

Claims 2 to 11 describe particular embodiments of the method of the present invention.

A second aspect of the present invention discloses a system for distributing and dosing in wine tastings, in particular for implementing the method of the invention, which in essence is characterized by the characterizing part of the claim 12.

### BRIEF DESCRIPTION OF THE DRAWINGS

Below is a detailed description of a preferred, though not exclusive, embodiment of the method and system for distributing wine and dosing for wine tastings object of the present invention; a set of drawings is attached for a better understanding given merely by way of illustration and not limiting the scope of the invention. According to said drawings:
Fig. 1 is a general schematic representation of the system according to the present invention;
Figure 2 is a perspective view of a container according to the present invention; and
Fig 3 is a perspective view of an opening and wine pouring machine to be used in conjunction with the method and system of the present invention.

### DETAILED DESCRIPTION OF AN EMBODIMENT ON THE INVENTION

Said drawings show the operating mode of the method and system for wine distribution and dosage in wine tasting, for the marketing of wines, which is disclosed herein.

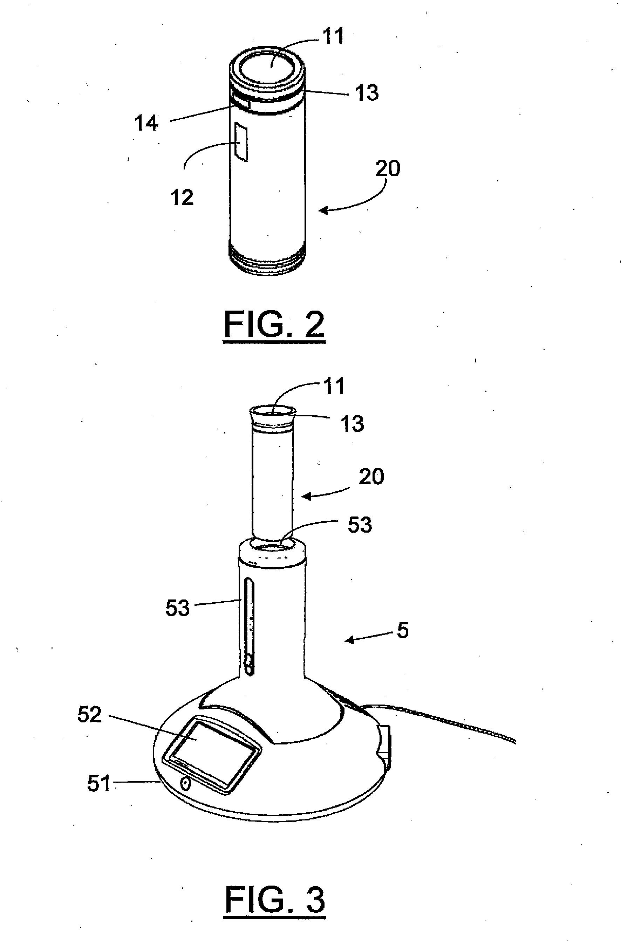

The method comprises bottling the wine in tubular containers (20) (see Figure 2), with a capacity of one or a few standard glasses of the wine in question. The container (20) has a sealing layer (11) of a sheet material, preferably aluminium, designed to be cut with a small blade from a dispensing machine (5) which is used in the method as explained below.

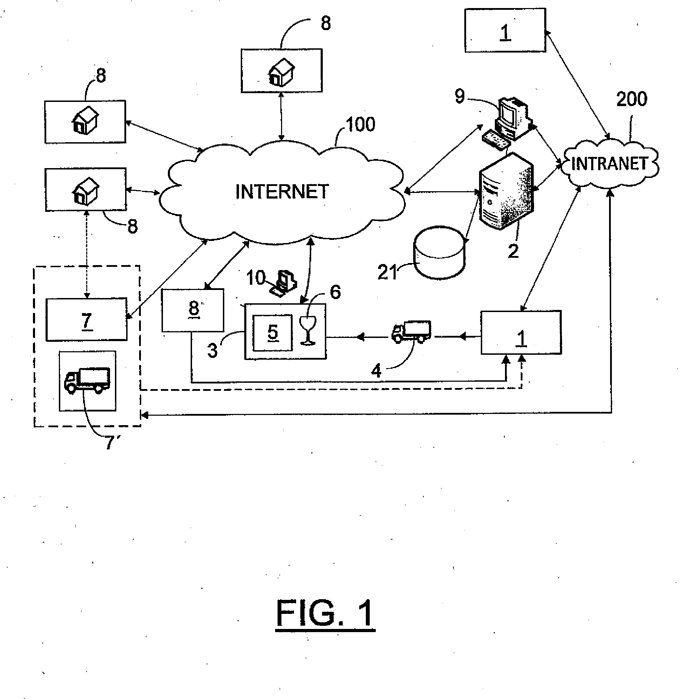

Fig. 1 shows how the system for the distribution and dosing in wine tasting comprises:
- multiple wine containers (20), having a capacity adapted to the wine tasting,
- dosing and bottling means for said wine containers (20), said dosage corresponding to doses adapted to the wine tasting,
- logistic centres (1) for storage and distribution of wine containers (20)
- a remote central server (2) to store information about the location of containers (20) distributed to such distribution centres,
- a user (5) computer (10) to issue a service request or order to said remote central server (2), said instruction including at least the wine identification and the number of containers,
- computing means on the central server (2) for selecting a logistic centre (1), and to send an instruction to the selected logistic centre, said instruction comprising at least information about the user's location (3), the identification of the wine and the number of containers (20),
- means of transport (4) to supply the user, from the logistic centre selected, with at least the number of containers (20) of wine ordered, and
- a dispensing machine (5) adapted so as to automatically open a container (20) of the wine ordered placed on the dispenser machine (5).

The bottling or dosing of the containers (20) whose capacity is adjusted to wine tasting may be performed at the winery (8), by means of conventional bottling machines (7), adapted to the particular tubular shape of the tubular containers (20) of the invention, or in mobile bottling plants (7') which, being of a known type, are not explained in greater detail.

The filled containers (20) are distributed to the logistic centres (1), as shown in Fig 1. Some wineries may ship wine in bulk to a logistics centre (1) where the bottling of wine in the containers (20) can be alternatively carried out.

The system comprises connecting the wineries (8), bottlers (7, 7') via the internet (20) (or other alternative WAN) to a "website" provided on a central server (2), having a database (21). The logistic centres (1) and the bottling plants (7, 7') are connected to the central server (2) via an intranet (200) (or other alternative LAN). They could also be connected via the Internet (100).

According to the method, a user (3) performs a purchase order, for example from a computer (10) (Fig. 1), to the central server (2), through said "website", containing at least: the user's location; wine identification (e.g. name of the wine); and the number of containers (20) or a specific total volume. Subsequent to this order, means of transport (4) deliver to the user (3) the containers (20) ordered. These orders can also be made through the so-called "call centres".

The user (3) may have at least one dispensing machine (5), especially designed to automatically open a container (20) of the wine for consumption, which, placed on the dispensing machine (5), pours the wine into a glass (6). This user (3) can sell the wine bottled in the containers (20) offering a wine tasting service by using the dispensing machine (5), as this is the only device capable of opening the containers (20), according to their design. The user (3) can be a restaurant, a hotel, a bar or a shop open to the public, or a consumer who buys the containers (20) in a specialized store and has a dispensing machine (5) at home.

The dispensing machine (5) -an example embodiment of which is shown in Fig 3 in the shape of a decanter- has a tubular housing (53) for the container (20), a support base (51), a display (52) to display information concerning the wine contained in the container (20), data that may be contained in an RFID card which is explained later on. In the embodiment illustrated, the container (20) is inserted into the dispensing machine (5) in the position shown in Figure 3, with the opening (13) facing upwards.

Once inserted into the tubular housing (53), cutting means then cut the sealing layer (11), clearing the way for the wine content. One possible form of automatically opening and activating the cutting could consist of means for rotating the container (20) relative to the tubular housing (53), for example a thread on the container (20) being complementary to a thread on the machine (5), to allow the longitudinal advance and the simultaneous rotation of the sealing layer (11) in relation to the blade.

To pour wine, the dispensing machine (5), with the container (20) duly inserted, is tipped, being placed upside down, leaving the opening (13) directly open onto a glass (6) to be served, whereby the wine is poured.

The container (20) comprises an RFID reader and writer card (12) which includes an identification code for the wine content, together with information relating thereto for reading through an RFID reader of the RFID card of the containers, implemented on the dispensing machine (5). The containers (20) may additionally have a barcode (14) or other coded or non-coded information. A 2-D code system or any other technically related and equivalent may also be used.

According to the method, when the wine is bottled in the plants (7, 7'), said identification code is written on the RFID card by suitable means, together with such information concerning the bottled wine: vintage, grape variety, maceration type, time in the barrel and type of barrel, temperature, tasting notes, alcohol content, etc..

Then, before opening the container (20) by means of the dispensing machine (5), the latter reads the RFID card (12) code. If the code is correct, the method allows the container (20) to be opened. Conversely, if the code is incorrect, it prevents the opening of the container (20), for example by not allowing the cutting of the aluminium sealing layer (11), inhibiting the action of the cutting means.

After opening the container, the identification code of the RFID card (12) is cancelled, setting it as "incorrect", so that the container (20) can no longer be reopened by the machine (5), in order to prevent fraudulent use. Obviously, the users (3) are connected to the central server (2), the logistic centres (1), the bottlers (7, 7') and (8) wine production wineries (8) via the Internet 100 or an alternative WAN.

A possible variant of the invention has provided the additional step of storing a plurality of containers (20) in a refrigerated cabinet.

Having sufficiently described the nature of the present invention and its practical embodiment, it is noted that provided its fundamental principle is not altered, it may be subjected to variations of detail. In this sense, instead of mobile bottling devices, each winery could have its own bottling system. Similarly, the server machine (5) may be designed such that the containers (20) may be placed downwards, directly over the position of a glass (6), thus without needing to tip the dispensing machine (5).

## Claims

1. A method for the distribution and dosing in wine tasting, **characterized in that** it comprises the following steps:
- dosing the containers (20) of wine, said dosage corresponding to doses adjusted to wine tasting,
- the storage of information on a remote central server (2) on the location of the containers (20) distributed to the distribution logistic centres (1),
- receiving a service request or order by a user (3) to the remote central server (2), said instruction comprising at least the identification of wine and the number of containers (20),
- selecting from said remote central server (2) a logistic centre (1),
- sending an instruction to said logistic centre, said instruction comprising at least the information on the user's location, wine identification and number of containers (20),
- providing the user, from the logistic centre selected, at least the number of containers (20) of wine ordered, as well as
- providing a dispensing machine (5) adapted to open the containers (20) of the wine ordered,
- placing the container (20) on the dispensing machine (5),
- automatic opening of the container (20) by the dispensing machine, and
- pouring the contents of the wine container (20) into a glass (6) placed underneath the dispensing machine (5).

2. A method according to claim 1, **characterized in that**, in the dispensing machine (5), the container (20) is placed upside down, directly over the glass (6) to be served.

3. A method according to claim 1, **characterized in that** the container (20) comprises a seal (11) made of a sheet material which is cut by cutting means of said machine (5) in order to pour the wine into said glass (6).

4. A method according to claim 1, **characterized in that** it comprises a further step 5 for the storage of a plurality of containers (20) in a refrigerated cabinet.

5. A method according to claim 2, **characterized in that** it further comprises the additional steps of:
- inserting in the container (20) an RFID writer and reader card (12) which includes an identification code of the wine content; and
- providing on the dispensing machine (5) an RFID reader of the RFID card of the containers (20).

6. A method according to claim 5, **characterized in that** it further comprises the additional step of:
- writing, in the bottling step, said identification code on the RFID card.

7. A method according to claim 6, **characterized in that** it further comprises the additional steps:
- reading, before opening the container (20) by means of the dispensing machine (5), the RFID card code, and
- if the code is correct, it opens the container (20), and
- if the code is incorrect, it prevents the container (20) from being opened.

8. A method according to claim 7, **characterized in that** it further comprises the additional step of:
- after opening the container (20), the identification code of the RFID card (12) is cancelled.

9. A method according to claim 2, **characterized in that** it comprises adapting the dispensing machine (5) for opening tubular shaped containers (20).

10. A method according to claim 1, **characterized in that** it comprises connecting the users (3), the central server (2), the logistic centres (1), bottlers (7, 7') and wine production wineries (8) via the internet (100) or a WAN.

11. A method according to claim 1, **characterized in that** it comprises connecting the central server (2), the logistic centres (1) and bottlers (7, 7') via an Intranet (200) or LAN.

12. A system for the distribution and dosing in wine tastings, **characterized in that** it comprises:
- multiple containers (20) of wine, having a capacity adapted to wine tasting,
- dosing means of said wine containers (20), said dosage corresponding to doses adapted to wine tasting,
- logistic centres (1) for the storage and distribution of wine containers (20),
- a remote central server (2) to store information on the location of the containers (20) distributed to said distribution centres,
- a user (5) computer (10) to issue a service request or order to said remote central server (2), said instruction comprising at least the identification of the wine and the number of containers,
- computer means at the central server (2) for the selection of a logistic centre (1), and to send an instruction to the logistic centre selected, said instruction containing at least information on the user's location (3), identification of the wine and the number of containers (20),
- transport means (4) to supply the user, from the selected logistics centre, at least with the number of containers (20) of the wine ordered, and
- a dispensing machine (5) adapted so as to automatically open a container (20) of the wine ordered placed on the dispensing machine (5).
